# EUROPEAN PATENT SPECIFICATION

(11) **EP 2 024 439 B1**
(45) Date of publication and mention of the grant of the patent: **27.06.2012**
(21) Application number: 07743617.8
(22) Date of filing: 11.05.2007
(51) Int. Cl.: C08K 5/50, C08L 83/04, C08K 5/5377

(54) **CURABLE SILICONE RESIN COMPOSITION AND CURED BODY THEREOF**
HÄRTBARE SILIKONHARZZUSAMMENSETZUNG UND GEHÄRTETER KÖRPER DARAUS
COMPOSITION DE RÉSINE DE SILICONE DURCISSABLE ET CORPS DURCI EN DÉRIVANT

(30) Priority: 16.05.2006 JP 2006137074
(43) Date of publication of application: 18.02.2009
(73) Proprietor: Dow Corning Toray Co., Ltd., Tokyo 100-0005 (JP)
(72) Inventor: YOSHITAKE, Makoto, Ichihara-shi, Chiba 299-0108 (JP); TAKEUCHI, Kasumi, Ichihara-shi, Chiba 299-0108 (JP); SAGAWA, Takashi, Ichihara-shi, Chiba 299-0108 (JP); NAKANISHI, Koji, Ichihara-shi, Chiba 299-0108 (JP)
(74) Representative: Gillard, Richard Edward
(86) International application number: PCT/JP2007/060182
(87) International publication number: WO 2007/132932

(56) References cited:
- EP-A1- 1 535 965
- US-A1- 2004 022 978

## Description

### Technical Field

The present invention relates to a curable silicone resin composition that is cured by a hydrosilylation reaction and to a cured body of the aforementioned composition. More specifically, the invention relates to a curable silicone resin composition which is solid at room temperature, melts with heating, is suitable for transfer molding or injection molding, and, when cured, forms a cured body that is characterized by high strength and high resistance to color change under the effect of UV radiation and heat.

### Background Art

Known in the art is a curable silicone resin composition that comprises an organopolysiloxane having at least two unsaturated aliphatic hydrocarbon groups in one molecule, an organopolysiloxane having at least two silicon-bonded hydrogen atoms in one molecule, and a hydrosilylation catalyst. In many cases this composition is in a liquid or putty-like state at room temperature, making this compound unsuitable for transfer or injection molding. Therefore, in order to make a hydrosilylation-curable silicone resin composition suitable for transfer or injection molding, it was proposed in Japanese Unexamined Patent Application Publications (hereinafter referred to as "Kokai") S50-80356 and S51-34259 to prepare this composition in such a way that it is solid at room temperature and melts when heated.

However, even though the curable silicone resin composition of the types disclosed in Kokai S50-80356 and Kokai S51-34259 is a solid at room temperature and the curing thereof can be accelerated under the action of a hydrosilylation catalyst, the composition has poor storage stability. Furthermore, because heat, which has to be used in the preparation of this composition, causes curing, the obtained composition has poor product reproducibility during transfer and injection molding.

Attempts have been made to prepare the hydrosilylation-curable silicone resin composition either as a one-part composition or to add a hydrosilylation-reaction retarder to improve storage stability of the composition. However, these measures caused either coloring of the cured body obtained by curing the composition or reduced resistance of molded products to color change under the effect of UV radiation or heat. As a result, a cured body obtained from such curable silicone resin compositions become unsuitable for use in molding optical materials, e.g., as a sealant for light-emitting diodes.

EP 1 535 965 discloses a film made from a cross-linked polysiloxane obtained by subjecting a polysiloxane that has a specific chemical structure and contains at least two unsaturated aliphatic hydrocarbon groups in one molecule and an organosilicon compound with at least two hydrogen atoms directly bonded to silicon atoms in one molecule to cross-linking reaction in the presence of a platinum-type catalyst.

It is an object of the present invention to provide a curable silicone resin composition that can be used as a one-part form that is solid at room temperature, melts when heated, is suitable for transfer and injection molding, and, when cured, forms a cured body that is characterized by high strength and resistance to change of color under the effect of UV radiation and heat. It is another object to provide a cured body of the aforementioned composition of high transparency that is characterized by high strength and reduced color change under the effect of UV radiation and heat.

### Disclosure of Invention

The present invention relates to a hydrosilylation-curable silicone resin composition having a melting point of not less than 50°C and a melt-viscosity of not less than 5,000 mPa·s at 150°C, wherein the aforementioned curable silicone resin composition comprises at least the following components:
an organopolysiloxane (A) having in one molecule at least two unsaturated aliphatic hydrocarbon groups;
an organopolysiloxane (B) having in one molecule at least two silicon-bonded hydrogen atoms {this component is used in such an amount that 0.1 to 10 moles of silicon-bonded hydrogen atoms correspond to 1 mole of unsaturated aliphatic hydrocarbon groups contained in component (A)};
a metal-type hydrosilylation-reaction catalyst (C) (in an amount capable of accelerating curing of the composition; and
a phosphorous-containing hydrosilylation retarder (D) {in the amount of 0.01 to 1,000 moles per 1 mole of metal atoms contained in component (C)}.

The invention also relates to a cured body obtained by curing the aforementioned composition.

### Effects of Invention

The curable silicone resin composition can be used as a one-part form that melts when heated, is suitable for transfer and injection molding, and, when cured, forms a cured body that is characterized by high strength and resistance to change of color under the effect of UV radiation and heat. Furthermore, the cured body of the composition has high transparency and is characterized by high strength and reduced color change under the effect of UV radiation and heat.

### Detailed Description of the Invention

The curable silicone resin composition of the invention has a melting point of not less than 50°C and a melt-viscosity of not less than 5,000 mPa·s at 150°C. Because this composition is solid at room temperature (25°C), softens when heated to a temperature of not less than 50°C, and has a melt-viscosity of not less than 5,000 mPa·s at 150°C, it is suitable for transfer and injection molding.

The composition of the invention is cured by a hydrosilylation reaction and is characterized by having a phosphorous-containing hydrosilylation-reaction retarder. The aforementioned retarder is a component that is used for adjusting curing of the composition during the hydrosilylation reaction. The hydrosilylation-reaction retarder is exemplified by the following compounds: diphenylphosphine, triphenylphosphine, dimethylphenylphosphine, diethylphenylphosphine, tripropylphosphine, dicyclohexylphenylphosphine, bis (diphenylphosphino) methane, 1,2-bis (diphenylphosphino) ethane, 1,2-bis (diphenylphosphino) propane, 1,3-bis (diphenylphosphino) propane, 1,4-bis (diphenylphosphino) butane, 2,3-bis (diphenylphosphino) butane, 1,5-bis (diphenylphosphino) pentane, 1,6-bis (diphenylphosphino) hexane, bis (2-diphenylphosphinoethyl) phenylphosphine bis (diphenylphosphino) acetylene, 1,1-bis (diphenylphosphino) ethylene, 1,2-bis (diphenylphosphino) ethylene, 1,1-bis (diphenylphosphino) ferrocene, 1,3-bis (dicyclohexylphosphino) propane, 1,2-bis (dimethylphosphino) ethane, 1,2-bis (dimethylphosphino) benzene, or 1,2-bis (diphenylphosphine) benzene, or a similar phosphine-type compound; diphenylphosphine oxide, triphenylphosphine oxide, dimethylphenylphosphine oxide, diethylphenylphosphine oxide, tripropylphosphine oxide, tributylphosphine oxide, or a similar phosphine oxide-type compound; triphenylphosphate, trimethylphosphate, triethylphosphate, tripropylphosphate, tributylphosphate, diphenylmethylphosphate, or a similar phosphoric acid-type compound; dimethyl methylphosphonate, diethyl methylphosphonate, dipropyl methylphosphonate, or a similar phosphonic acid-type compound; triphenyl phosphite, trimethyl phosphite, triethyl phosphite, tripropyl phosphite, tributyl phosphite, diphenyl phosphite, dimethyl phosphite, diethyl phosphite, dipropyl phosphite, dibutyl phosphite, or a similar phosphorous acid-type compound; dimethyl phenylphosphonite, diethyl phenylphosphonite, dipropyl phenylphosphonite, or a similar phosphonous acid-type compound Most preferable are phosphine-type compounds, in particular bis-(diphenylphosphino) methane, 1,2-bis-(diphenylphosphino) ethane, or 1,2-bis-(diphenylphosphino) propane.

There are no special restrictions with regard to the amounts in which the aforementioned retarders can be used in the composition of the present invention. It is recommended, however, to add the retarder in an amount of 0.01 to 1000 moles, preferably 0.1 to 500 moles per one mole of metal atoms in the metal-type hydrosilylation catalyst contained in the composition of the invention. If the retarder is added in an amount below the recommended lower limit, it will be difficult to prepare the composition in the form of a one-part, and it will also impair transfer or injection molding. If, on the other hand, the retarder is added in an amount exceeding the recommended upper limit, curing will be difficult.

The curable silicone resin composition of the invention comprises at least the following components:
an organopolysiloxane (A) having in one molecule at least two unsaturated aliphatic hydrocarbon groups;
an organopolysiloxane (B) having in one molecule at least two silicon-bonded hydrogen atoms {this component is used in such an amount that 0.1 to 10 moles of silicon-bonded hydrogen atoms correspond to 1 mole of unsaturated aliphatic hydrocarbon groups contained in component (A)};
a metal-type hydrosilylation-reaction catalyst (C) (in an amount capable of accelerating curing of the composition; and
a phosphorous-containing hydrosilylation retarder (D) {in the amount of 0.01 to 1,000 moles per 1 mole of metal atoms contained in component (C)}.

The organopolysiloxane that constitutes component (A) contains in one molecule at least two unsaturated aliphatic hydrocarbon groups. There are no special restrictions with regard to the molecular structure of this compound, which may have a linear, partially branched linear, or branched molecular structure. The branched molecular structure is preferred. The unsaturated aliphatic hydrocarbon groups are represented by vinyl, allyl, propenyl, isopropenyl, butenyl, octenyl, or similar alkenyl groups; cyclohexenyl, cycloheptenyl, or similar cycloalkenyl groups. Of these, most preferable are alkenyl groups, especially vinyl, allyl, and hexenyl groups. Component (A) is represented by the following average structural formula:

R¹ₐSiO_{(4-a)/2},

where R¹ is an optionally substituted univalent hydrocarbon group, an alkoxy group, or a hydroxyl group. The univalent hydrocarbon group designated by R¹ is exemplified by methyl, ethyl, propyl, isopropyl, butyl, isobutyl, tert-butyl, pentyl, neopentyl, hexyl, cyclohexyl, octyl, nonyl, decyl, or a similar alkyl group; vinyl, allyl, propenyl, isopropenyl, butenyl, hexenyl, octenyl, or a similar alkenyl group; cyclohexenyl, cycloheptenyl, or a similar cycloalkenyl group; phenyl, tolyl, xylyl, naphthyl, or a similar aryl group; benzyl, phenethyl, phenylpropyl, or a similar aralkyl group; 3-chloropropyl, 2-bromoethyl, 3,3,3-trifluoropropyl, or a similar halogen-substituted alkyl group. However, at least two groups designated by R¹ contained in one molecule should be univalent hydrocarbon groups with unsaturated aliphatic bonds, such as alkenyl, cycloalkenyl, or similar groups. Most preferable are the aforementioned alkenyl groups. In the above formula, "a" is a number that satisfies the following condition: 1 ≤ a < 2.

In the aforementioned organopolysiloxane that represents component (A), a phenyl group is introduced in order to provide a high refractive index of a cured body obtained from the composition of the invention. It is recommended that component (A) be represented by the following average structural formula:

R¹ₚ(C₆H₅)_{q}SiO_{(4-p-q)/2},

where R¹ is the same as defined above, and "p" and "q" are numbers that satisfy the following condition: 1 ≤ (p +q) < 2, preferably 1 ≤ (p + q) ≤ 1.8, and even more preferably should satisfy the following conditions: 1 ≤ (p + q) ≤ 1.5 and 0.20 ≤ q/(p + q) ≤ 0.95, preferably 0.30 ≤ q/(p + q) ≤ 0.80, and even more preferably 0.45 ≤ q/(p + q) ≤ 0.70.

Component (A) can be prepared by various methods. According to one method, component (A) can be prepared by subjecting phenyltrichlorosuane and a chlorosilane that contains alkenyl groups, e.g., vinyltrichlorosilane, methylvinyldichlorosilane, dimethylvinylchlorosilane, allylmethyldichlorosilane, butenylmethyldichlorosilane, methylpentyldichlorosilane, hexenyltrichlorosilane, hexenylmethyldichlorosilane, hexenyldimethylchlorosilane, heptenylmethyldichlorosilane, methyloctenyldichlorosilane, methylnonenyldichlorosilane, decenylmethyldichlorosilane, methylundecenyldichlorosilane, or dodecenylmethyldichlorosilane to cohydrolysis and condensation, if necessary, in the presence of tetrachlorosilane, methyltrichlorosilane, dimethyldichlorosilane, or trimethylchlorosilane. According to another method, component (A) can be prepared by subjecting phenyltrimethoxysilane and an alkoxysilane that contains alkenyl groups, e.g., vinyltrimethoxysilane, methylvinyldimethoxysilane, dimethylvinylmethoxysilane, allylmethyldimethoxysilane, butenylmethyldimethoxysilane, methylpentenyldimethoxysilane, hexenyltrimethoxysilane, hexenylmethyldimethoxysilane, hexenyldimethylmethoxysilane, heptenylmethyldimethoxysilane, methyloctenyldimethoxysilane, methylnonenyldimethoxysilane, decenylmethyldimethoxysilane, methylundecenyldimethoxysilane, dodecenylmethyldimethoxysilane to cohydrolysis and condensation, if necessary, in the presence of tetramethoxysilane, methyltrimethoxysilane, dimethyldimethoxysilane, or trimethylmethoxysilane. Another method consists of subjecting silanol groups contained in the silicone resin obtained by the above-described methods to condensation in the presence of an acidic or basic polymerization catalyst. The following methods are also possible: subjecting silicone resin composed of C₆H₅SiO_{3/2} units and methylvinylsiloxane capped at both molecular terminals with trimethylsiloxy groups to equilibrium polymerization in the presence of an acidic or basic polymerization catalyst; subjecting silicone resin composed of C₆H₅SiO_{3/2} units and cyclic methylvinylsiloxane to equilibrium polymerization in the presence of an acidic or basic polymerization catalyst; subjecting silicone resin composed of C₆H₅SiO_{3/2} units, cyclic methylvinylsiloxane, and cyclic dimethylsiloxane to equilibrium polymerization in the presence of an acidic or basic polymerization catalyst; subjecting silicone resin composed of C₆H₅SiO_{3/2} units and methylhexenylsiloxane capped at both molecular terminals with silanol groups to equilibrium polymerization in the presence of an acidic or basic polymerization catalyst; subjecting silicone resin composed of C₆H₅SiO_{3/2} units and cyclic hexenylmethylsiloxane to equilibrium polymerization in the presence of an acidic or basic polymerization catalyst; or subjecting silicone resin composed of C₆H₅SiO_{3/2} units, cyclic hexenylmethylsiloxane, and cyclic methylvinylsiloxane to equilibrium polymerization in the presence of an acidic or basic polymerization catalyst.

The organopolysiloxane that constitutes component (B) contains in one molecule at least two silicon-bonded hydrogen atoms and is used in the composition of the invention as a cross-linking agent. There are no special restrictions with regard to the molecular structure of component (B), and this compound may have a linear, partially branched linear, or branched molecular structure, of which the branched molecular structure is preferable. Component (B) is represented by the following average structural formula:

R²_{b}H_{c}SiO(_{4-b-c)/2,}

where R² is an optionally substituted univalent hydrocarbon group without unsaturated aliphatic bonds. This group is represented by methyl, ethyl, propyl, isopropyl, butyl, isobutyl, tert-butyl, pentyl, neopentyl, hexyl, cyclohexyl, octyl, nonyl, decyl, or a similar alkyl group; phenyl, tolyl, xylyl, naphthyl, or a similar aryl group; benzyl, phenethyl, phenylpropyl, or a similar aralkyl group; 3-chloropropyl, 2-bromoethyl, 3,3,3-trifluoropropyl, or a similar halogen-substituted alkyl group. In the above formula, "b" and "c" are numbers that should satisfy the following conditions: 0.7 ≤ b ≤ 2.1; 0.001 ≤ c ≤ 1.0; and 0.8 ≤ (b + c) ≤ 2.6. Most preferable are the following conditions: 0.8 ≤ b ≤ 2 ; 0.01 ≤ c ≤ 1; and 1 ≤ (b + c) ≤ 2.4).

Aforementioned component (B) is exemplified by 1,1,3,3-tetramethyldisiloxane, 1,3,5,7,-tetramethylcyclotetrasiloxane, methylhydrogenpolysiloxane capped at both molecular terminals with trimethylsiloxy groups, a copolymer of methylhydrogensiloxane and dimethylsiloxane capped at both molecular terminals with trimethylsiloxy groups, dimethylpolysiloxane capped at both molecular terminals with dimethylhydrogensiloxy groups, a copolymer of methylhydrogensiloxane and dimethylsiloxane capped at both molecular terminals with dimethylhydrogensiloxy groups, a copolymer of diphenylsiloxane and methylhydrogensiloxane capped at both molecular terminals with trimethylsiloxy groups, a copolymer of dimethylsiloxane, diphenylsiloxane, and methylhydrogensiloxane capped at both molecular terminals with trimethylsiloxy groups, a copolymer composed of (CH₃)₂HSiO_{1/2} units and SiO_{4/2} units, or a copolymer composed of (CH₃)₂HSiO_{1/2} units, SiO_{4/2} units, and C₆H₅SiO_{3/2} units.

There are no special restrictions with regard to the amount in which component (B) can be used in the composition of the invention, but it is recommended that this component be added in such an amount that the content of silicon-bonded hydrogen atoms of component (B) range from 0.1 to 10 moles, preferably 0.5 to 5 moles per one mole of the unsaturated aliphatic hydrocarbon groups of component (A). If the mole ratio of the silicon-bonded hydrogen atoms of component (B) to unsaturated aliphatic hydrocarbon groups of component (A) is below the recommended lower limit, then the obtained composition may not be completely cured; on the other hand, if the ratio exceeds the recommended upper limit, this will either create voids in the cured body or will reduce the mechanical strength thereof.

A metal-type hydrosilylation catalyst that constitutes component (C) is used to accelerate the hydrosilylation reaction of the composition. There are no special restrictions with regard to component (C) which is exemplified by a platinum-type catalyst, a rhodium-type catalyst, or a palladium-type catalyst, of which the platinum-type catalyst is preferable. The platinum-type catalyst is exemplified by an alcohol-modified chloroplatinic acid, a platinum-olefin complex, a platinum-alkenylsiloxane complex, or a platinum-carbonyl complex. The aforementioned metal-type catalysts can be prepared in the form of fine particles dissolved or dispersed in a thermoplastic resin or can be prepared as microencapsulated fine particles consisting of a platinum-type catalyst core in a thermoplastic resin shell. Thermoplastic resin is exemplified by silicone resin, polysilane resin, acryl resin, methylcellulose, or a polycarbonate resin. It is recommended that the thermoplastic resin have a softening point or a glass-transition point ranging from 40 to 200°C.

There are no special restrictions with regard to the amount in which component (C) can be added to the composition, provided that curing of the composition is accelerated. For example, when a platinum-type catalyst is used as component (C), it can be contained in the composition, in terms of mass units, in an amount of 0.1 to 2000 ppm, preferably 1 to 1000 ppm of metallic platinum. If the content of component (C) is below the recommended lower limit, it will be difficult to provide sufficient curing; on the other hand, if it is contained in an amount exceeding the recommended upper limit, it will not significantly improve curing.

The phosphorous-containing hydrosilylation retarder (D) is used to control curing of the composition by means of the hydrosilylation reaction. It is exemplified by the same compounds as given above. There are no special restrictions with regard to the amount in which this component can be added to the composition, but it is recommended that component (D) be added in an amount ranging from 0.01 to 1000 moles, preferably 0.1 to 500 moles per one mole of metal atoms in component (C). If the added amount is below the recommended lower limit, then in the one-part form, the hydrosilylation reaction will increase viscosity of the composition and will make it unsuitable for use in transfer or ejection molding. On the other hand, if the added amount exceeds the recommended upper limit, curing will be difficult.

Within the limits that are not contradictory to the objects of the invention, aforementioned component (D) can be combined with other hydrosilylation reaction retarders, such as 2-methyl-3-butyn-2-ol, 3,5-dimethyl-1-hexyn-3-ol, 2-phenyl-3-butyn-2-ol, or a similar alkyn alcohol; 3-methyl-3-penten-1-yne, 3,5-dimethyl-3-hexen-1-yne, or a similar enyne compound; 1,3,5,7-tetramethyl-1,3,5,7-tetravinylcyclotetrasiloxane, 1,3,5,7-tetramethyl-1,3,5,7-tetrahexenylcyclotetrasiloxane, or benzotriazole. There are no special restrictions with regard to the amount in which the retarder can be added to the composition; however, in general, it can be added in a very small amount relative to the curable silicone resin composition that contains a platinum-type catalyst. More specifically, the retarder can be added in an amount of 0.0001 to 10 parts by mass, preferably 0.001 to 5 parts by mass per hundred parts by mass of component (A).

If not in contradiction with the objects of the invention, the composition may incorporate inorganic fillers, adhesion-imparting agents, or the like. Inorganic fillers are exemplified by fumed silica, precipitated silica, titanium dioxide, carbon black, alumina, quartz powder, or similar inorganic fillers, as well as the same fillers subjected to hydrophobic surface treatment with organoalkoxysilane, organochlorosilane, organosilazane, or with a similar organic silicone compound. The adhesion-imparting agents are exemplified by 3-methylacryoxypropyl trimethoxysilane, 3-acryloxypropyl trimethoxysilane, or a similar acryloxy-containing organoalkoxysilane; 3-aminopropyl trimethoxysilane, N-(2-aminoethyl)-3-aminopropyl trimethoxysilane, or a similar amino-containing organoalkoxysilane; 3-glicydoxypropyl trimethoxysilane or a similar epoxy-containing organoalkoxysilane, or other silane-coupling agents; a product of condensation of 3-glicydoxypropyl trialkoxysilane and dimethylpolysiloxane capped with silanol groups, a product of condensation of 3-glicydoxypropyl trialkoxysilane and a methylvinylpolysiloxane capped with silanol groups, or a product of condensation of 3-glicydoxypropyl trialkoxysilane and a copolymer of methylvinylsiloxane and dimethylsiloxane capped with silanol groups.

There are no special restrictions with regard to the method that can be used to prepare the composition of the invention. For example, components (C) and (D) are mixed, then components (A) and (B) are dissolved in organic solvents and mixed, the solvents are removed by distillation, and the obtained mixture, which is solid at room temperature, is crushed. According to another method, components (C) and (D) are premixed, and then components (A) and (B) are melted and mixed. The composition of the invention can be prepared by a method different from the methods used to prepare conventional curable silicone resin compositions in a liquid or a paste-like form.

When the curable silicone resin composition of the invention is cured, it forms a cured body of high strength and excellent transparency, with minimal color change under the effect of ultraviolet rays and heat. Therefore, this composition is suitable for use as a moldable resin for manufacturing lenses or other optical parts and for use in the optical field as a sealing and protective agent for parts such as light-emitting diodes, etc.

The cured body of the invention will now be described in more detail. The cured body is obtained by curing the above-described silicone resin composition. Since there is minimal color change under the effect of ultraviolet rays and heat, the cured body can be used as a material suitable for optical applications, e.g., as a protective or sealing agent for light-emitting diodes, or as an optical material for manufacturing lenses, light guides, etc.

### Examples

The curable silicone resin composition of the invention and a cured body of the composition will be further described in more detail with reference to application and comparative examples. In subsequent examples, the softening point of the curable silicone resin composition, the melt-viscosity of the composition at 150°C, and the mechanical strength of the cured body of the composition were measured by the methods described below.

### [Measurement of Softening Point]

The softening point was measured by means of a softening-point measurement instrument as an average temperature measured from the beginning of liquefaction of a portion of a powdered, curable silicone resin composition to complete liquefaction of the entire composition.

### [Measurement of Melt-Viscosity at 150°C]

Viscosity of the curable silicone resin composition at 150°C was measured with the use of the RDA-II viscosimeter (Rheometrics Company) having a 25-mm-diameter blade.

### [Mechanical Strength of a Cured Body]

The curable silicone resin composition was subjected to transfer molding for 10 minutes at 170°C, and then a rod-like cured body was formed in a secondary process by heating the product for 2 hours at 170°C. The obtained rod was used as a sample for testing the flexural strength and flexural modulus of elasticity in accordance with JIS K 7171-1994 (Method of Testing Flexural Characteristics of Plastics).

### [Application Example 1]

The amount of 86.2 parts by mass of an organopolysiloxane represented by the following average unit formula:

[(CH₃)CH₂ = CHSiO_{2/2}]_{0.10} [(CH₃)2SiO_{2/2}]_{0.15} (C₆H₅SiO_{3/2})_{0.75}

and 13.8 parts by mass of an organopolysiloxane represented by the following average unit formula:

[(CH₃)₂HSiO_{1/2}]_{0.60} (C₆H₃SiO_{3/2})₀.₄₀

were dissolved in 100 parts by mass of toluene. A mixed solution was prepared from the following components: a divinyltetramethyldisiloxane solution of a divinyltetramethyldisiloxane complex of platinum (0) so that the content of platinum atoms became equal to 5 ppm per total mass of the aforementioned organopolysiloxanes; and a divinyltetramethyldisiloxane solution that contained 1,3-bis(diphenylphosphine) propane as a hydrosilylation reaction retarder in an amount 1.5 times the amount of platinum atoms. This mixed solution was added to the previously mentioned toluene solution of organopolysiloxanes, and the mixture was stirred. The toluene and the divinyltetramethyldisiloxane were removed by distillation in an evaporator, whereby a powdered, curable silicone resin composition was obtained. The obtained curable silicone resin composition had a softening point at 85°C and a melt-viscosity at 150°C equal to 20,000 mPa·s.

Following this, the obtained powdered, curable silicone resin composition was compressed to form a pellet, and the pellet was subjected to transfer-molding for 10 minutes at 170°C and to secondary heating for 2 hours at 170°C. As a result, a transparent cured body was produced. The cured transparent body had a flexural strength equal to 42 MPa and a flexural modulus of elasticity equal to 1.3 GPa.

Furthermore, a pellet formed by compressing the powdered, curable silicone resin composition was kept for 3 days in an oven at 50°C, subjected to transfer-molding for 10 minutes at 170°C and then to subsequent secondary heating for 2 hours at 170°C. The test showed that it was possible to obtain a cured body that had the same transparency, flexural strength, and flexural modulus of elasticity as the cured body of the composition prior to treatment in an oven.

### [Comparative Example 1]

A powdered, curable silicone resin composition was prepared in the same manner as described in Application Example 1, except that the hydrosilylation retarder comprised a methyl tris-(1,1dimethyl-2-propenyloxy) silane used in an amount of 1,000 ppm per total weight of the composition. However, a portion of the composition turned into a gel and was therefore unsuitable for subsequent transfer-molding.

### [Comparative Example 2]

A powdered, curable silicone resin composition was prepared in the same manner as described in Application Example 1, except that the hydrosilylation retarder comprised a methyl tris-(1,1-dimethyl-2-propenyloxy) silane used in an amount of 3,500 ppm per total weight of the composition. The obtained curable silicone resin composition had a melting point at 85°C and a melt-viscosity at 150°C equal to 20,000 mPa·s.

The obtained curable silicone resin composition was compressed into a pellet and subjected to transfer-molding for 10 minutes at 170°C, whereby the cured body produced in this process acquired a slight yellow tint. Therefore, there was no need to test mechanical strength of the cured body since it was already unsuitable for optical application. The obtained powdered silicone resin composition was compressed into a pellet for transfer molding for 10 minutes at 170°C. The molded body also had a yellowish tint.

### Industrial Applicability

The curable silicone resin composition of the invention can be produced as a one-part form, can be melted by heating, is suitable for transfer or injection molding, and, when cured, produces a cured body of high strength, excellent transparency, and resistance to color change under the effect of ultraviolet rays and heat. Therefore, this composition is suitable for use as a moldable resin for the production of optical parts such as lenses or the like and for use as an optical material for protecting and sealing optical elements such as light-emitting diodes or the like. Furthermore, the optical materials of the present invention may be used as sealing elements for lenses and optical parts.

## Claims

1. A hydrosilylation-curable silicone resin composition having a melting point of not less than 50°C and a melt-viscosity of not less than 5,000 mPa·s at 150°C,
wherein the aforementioned curable silicone resin composition comprises at least the following components:
an organopolysiloxane (A) having in one molecule at least two unsaturated aliphatic hydrocarbon groups;
an organopolysiloxane (B) having in one molecule at least two silicon-bonded hydrogen atoms in such an amount that 0.1 to 10 moles of silicon-bonded hydrogen atoms correspond to 1 mole of unsaturated aliphatic hydrocarbon groups contained in component (A);
a metal-type hydrosilylation-reaction catalyst (C) in an amount capable of accelerating curing of the composition; and
a phosphorous-containing hydrosilylation retarder (D) in the amount of 0.01 to 1,000 moles per 1 mole of metal atoms contained in component (C).

2. The composition of Claim 1, wherein the aforementioned phosphorous-containing hydrosilylation retarder is a compound of at least one type selected from a phosphine-type compound; a phosphoric acid-type compound, a phosphonic acid-type compound, a phosphine oxide-type compound, a phosphorous acid-type compound, or a phosphonous acid-type compound.

3. The composition of Claim 2, wherein the aforementioned phosphine-type compound is a compound of at least one type selected from diphenylphosphine, triphenylphosphine, dimethylphenylphosphine, diethylphenylphosphine, tripropylphosphine, dicyclohexylphenylphosphine, bis (diphenylphosphino) methane, 1,2-bis (diphenylphosphino) ethane, 1,2-bis (diphenylphosphino) propane, 1,3-bis (diphenylphosphino) propane, 1,4-bis (diphenylphosphino) butane, 2,3-bis (diphenylphosphino) butane, 1,5-bis (diphenylphosphino) pentane, 1,6-bis (diphenylphosphino) hexane, bis (2-diphenylphosphinoethyl) phenylphosphine, bis (diphenylphosphino) acetylene, 1,1-bis (diphenylphosphino) ethylene, 1,2-bis (diphenylphosphino) ethylene, 1,1-bis (diphenylphosphino) ferrocene, 1,3-bis (dicyclohexylphosphino) propane, 1,2-bis (dimethylphosphino) ethane, 1,2-bis (dimethylphosphino) benzene, or 1,2-bis (diphenylphosphine) benzene.

4. The composition of Claim 1, wherein aforementioned component (A) comprises an organopolysiloxane of the following average formula:
R¹ₐSiO_{(4-a)/2}
where R¹ is an optionally substituted univalent hydrocarbon group, an alkoxy group, or a hydroxyl group; however, at least two groups designated by R¹ in one molecule should comprise univalent hydrocarbon groups having unsaturated aliphatic bonds; "a" is a number that satisfies the following condition: 1 ≤ a < 2.

5. The composition of Claim 1, wherein aforementioned component (B) is an organopolysiloxane represented by the following average structural formula:
R²_{b}HₒSiO_{(4-b-0)/2}
where R² is an optionally substituted hydrocarbon group that does not contain unsaturated aliphatic bonds and where "b" and "c" are numbers that satisfy the following conditions: 0.7 ≤ b ≤ 2.1 ; 0.001 ≤ c ≤ 1.0; and 0.8 ≤ (b + c) ≤ 2.6.

6. The composition of Claim 1, wherein aforementioned component (C) is a platinum-type hydrosilylation-reaction catalyst.

7. A cured body obtained by curing the composition according to any of claims 1 to 6.

## Patentansprüche

1. Durch Hydrosilylierung härtbare Siliconharzzusammensetzung mit einem Schmelzpunkt von nicht weniger als 50°C und einer Schmelzviskostität von nicht weniger als 5.000 mPa·s bei 150°C, wobei die zuvor erwähnte härtbare Siliconharzzusammensetzung mindestens die folgenden Komponenten enthält:
ein Organopolysiloxan (A), das in einem Molekül mindestens zwei ungesättigte aliphatische Kohlenwasserstoffgruppen aufweist;
ein Organopolysiloxan (B), das in einem Molekül mindestens zwei siliciumgebundene Wasserstoffatome in einer solchen Menge aufweist,
dass 0,1 bis 10 mol siliciumgebundene Wasserstoffatome 1 mol ungesättigter aliphatischer Kohlenwasserstoffgruppen, die in Komponente (A) enthalten sind, entsprechen;
einen Hydrosilylierungsreaktionskatalysator (C) des Metalltyps in einer Menge, die fähig ist, die Härtung der Zusammensetzung zu beschleunigen, und
einen phosphorhaltigen Hydrosilylierungsverzögerer (D) in der Menge von 0,01 bis 1.000 mol pro 1 mol Metallatome, die in Komponente (C) enthalten sind.

2. Zusammensetzung nach Anspruch 1, wobei der zuvor erwähnte phosphorhaltige Hydrosilylierungsverzögerer eine Verbindung mindestens eines Typs ist, ausgewählt aus einer Verbindung des Phosphintyps, einer Verbindung des Phosphorsäuretyps, einer Verbindung des Phosphonsäuretyps, einer Verbindung des Phosphinoxidtyps, einer Verbindung des Phosphorigsäuretyps oder einer Verbindung des Phosphonigsäuretyps.

3. Zusammensetzung nach Anspruch 2, wobei die zuvor erwähnte Verbindung des Phosphintyps eine Verbindung mindestens eines Typs ist, ausgewählt aus Diphenylphosphin, Triphenylphosphin, Dimethylphenylphosphin, Diethylphenylphosphin, Tripropylphosphin,
Dicyclohexylphenylphosphin, Bis(diphenylphosphino)methan, 1,2-Bis(diphenylphosphino)ethan, 1,2-Bis(diphenylphosphino)propan, 1,3-Bis(diphenylphosphino)propan, 1,4-Bis(diphenylphosphino)butan, 2,3-Bis(diphenylphosphino)butan, 1,5-Bis(diphenylphosphino)pentan, 1,6-Bis(diphenylphosphino)hexan, Bis(2-diphenylphosphinoethyl)-phenylphosphin, Bis(diphenylphosphino)acetylen, 1,1-Bis(diphenylphosphino)ethylen, 1,2-Bis(diphenylphosphino)ethylen, 1,1-Bis(diphenylphosphino)ferrocen, 1,3-Bis(dicyclohexylphosphino)-propan, 1,2-Bis(diphenylphosphino)ethan, 1,2-Bis(dimethylphosphino)-benzol oder 1,2-Bis(diphenylphosphino)benzol.

4. Zusammensetzung nach Anspruch 1, wobei zuvor erwähnte Komponente (A) ein Organopolysiloxan der folgenden mittleren Formel enthält:
R¹ₐSiO_{(4-a)/2},
worin R¹ eine optional substituierte einbindige Kohlenwasserstoffgruppe, eine Alkoxygruppe oder eine Hydroxylgruppe ist, jedoch mindestens zwei Gruppen, die mit R¹ bezeichnet werden, in einem Molekül einbindige Kohlenwasserstoffgruppen mit ungesättigten aliphatischen Bindungen umfassen sollten; "a" eine Zahl ist, die die folgende Bedingung erfüllt: 1 ≤ a < 2.

5. Zusammensetzung nach Anspruch 1, wobei zuvor erwähnte Komponente (B) ein Organopolysiloxan ist, das durch die folgende mittlere Strukturformel dargestellt wird:
R²_{b}H_{c}SiO_{(4-b-c)/2},
worin R² eine optional substituierte Kohlenwasserstoffgruppe ist, die keine ungesättigten aliphatischen Bindungen enthält, und wobei "b" und "c" Zahlen sind, die die folgenden Bedingungen erfüllen: 0,7 ≤ b ≤ 2,1; 0,001 ≤ c ≤ 1,0 und 0,8 ≤ (b+c) ≤ 2,6.

6. Zusammensetzung nach Anspruch 1, wobei zuvor erwähnte Komponente (C) ein Hydrosilylierungsreaktionskatalysator des Platintyps ist.

7. Gehärteter Körper, der durch Härten der Zusammensetzung gemäß einem der Ansprüche 1 bis 6 erhalten wird.

## Revendications

1. Composition de résine de silicone durcissable par hydrosilylation ayant un point de fusion supérieur ou égal à 50 °C et une viscosité à l'état fondu supérieure ou égale à 5 000 mPa.s à 150 °C,
dans laquelle la composition de résine de silicone durcissable mentionnée ci-dessus comprend au moins les composants suivants :
un organopolysiloxane (A) comportant par molécule au moins deux groupes hydrocarbure aliphatiques insaturés ;
un organopolysiloxane (B) comportant par molécule au moins deux atomes d'hydrogène liés à du silicium en une quantité telle que de 0,1 à 10 moles d'atomes d'hydrogène liés à du silicium correspondent à 1 mole de groupes hydrocarbure aliphatiques insaturés contenus dans le composant (A) ;
un catalyseur de réaction d'hydrosilylation de type métallique (C) en une quantité permettant d'accélérer le durcissement de la composition ; et
un retardateur d'hydrosilylation contenant du phosphore (D) en une quantité de 0,01 à 1 000 moles pour 1 mole d'atomes de métaux contenus dans le composant (C).

2. Composition selon la revendication 1, dans laquelle le retardateur d'hydrosilylation contenant du phosphore mentionné ci-dessus est un composé d'au moins un type choisi parmi un composé de type phosphine ; un composé de type acide phosphorique, un composé de type acide phosphonique, un composé de type oxyde de phosphine, un composé de type acide phosphoreux ou un composé de type acide phosphoneux.

3. Composition selon la revendication 2, dans laquelle le composé de type phosphine mentionné ci-dessus est un composé d'au moins un type choisi parmi la diphénylphosphine, la triphénylphosphine, la diméthylphénylphosphine, la diéthylphénylphosphine, la tripropylphosphine, la dicyclohexylphénylphosphine, le bis (diphénylphosphino) méthane, le 1,2-bis (diphénylphosphino) éthane, le 1,2-bis (diphénylphosphino) propane, le 1,3-bis (diphénylphosphino) propane, le 1,4-bis (diphénylphosphino) butane, le 2,3-bis (diphénylphosphino) butane, le 1,5-bis (diphénylphosphino) pentane, le 1,6-bis (diphénylphosphino) hexane, la bis (2-diphénylphosphinoéthyl) phénylphosphine, le bis (diphénylphosphino) acétylène, le 1,1-bis (diphénylphosphino) éthylène, le 1,2-bis (diphénylphosphino) éthylène, le 1,1-bis (diphénylphosphino) ferrocène, le 1,3-bis (dicyclohexylphosphino) propane, le 1,2-bis (diméthylphosphino) éthane, le 1,2-bis (diméthylphosphino) benzène ou le 1,2-bis (diphénylphosphine) benzène.

4. Composition selon la revendication 1, dans laquelle le composant (A) mentionné ci-dessus comprend un organopolysiloxane répondant à la formule moyenne suivante :
R¹ₐSiO_{(4-a)/2}
où R¹ représente un groupe hydrocarbure univalent optionnellement substitué, un groupe alcoxy ou un groupe hydroxyle ; cependant, au moins deux groupes désignés par R¹ par molécule doivent comprendre des groupes hydrocarbure univalents comportant des liaisons aliphatiques insaturées ; « a » représente un nombre qui satisfait la condition suivante : 1 ≤ a < 2.

5. Composition selon la revendication 1, dans laquelle le composant (B) mentionné ci-dessus est un organopolysiloxane représenté par la formule structurale moyenne suivante :
R²_{b}H_{c}SiO(_{4-b-c})_{/2}
où R² représente un groupe hydrocarbure optionnellement substitué qui ne contient pas de liaisons aliphatiques insaturées et où « b » et « c » représentent des nombres qui satisfont les conditions suivantes : 0,7 ≤ b ≤ 2,1 ; 0,001 ≤ c ≤ 1,0 ; et 0,8 ≤ (b + c) ≤2,6.

6. Composition selon la revendication 1, dans laquelle le composant (C) mentionné ci-dessus est un catalyseur de réaction d'hydrosilylation au platine.

7. Corps durci obtenu en durcissant la composition selon l'une quelconque des revendications 1 à 6.
